# EUROPÄISCHE PATENTSCHRIFT

(11) **EP 2 427 316 B1**
(45) Veröffentlichungstag und Bekanntmachung des Hinweises auf die Patenterteilung: **27.11.2013**
(21) Anmeldenummer: 10720145.1
(22) Anmeldetag: 05.05.2010
(51) Int. Cl.: B29C 45/00, B29C 53/36, B29C 65/56, B65D 47/08, B29C 45/17, B29C 45/40, B29C 45/04

(54) **VORRICHTUNG ZUM HERSTELLEN VON VERSCHLÜSSEN**
DEVICE FOR PRODUCING CLOSURES
DISPOSITIF DE FABRICATION DE FERMETURES

(30) Priorität: 07.05.2009 CH 718092009; 02.12.2009 CH 18552009
(43) Veröffentlichungstag der Anmeldung: 14.03.2012
(73) Patentinhaber: Foboha GmbH Formenbau, 77716 Haslach (DE)
(72) Erfinder: ARMBRUSTER, Rainer, 77709 Wolfach (DE)
(74) Vertreter: Rentsch Partner AG
(86) Internationale Anmeldenummer: PCT/EP2010/056082
(87) Internationale Veröffentlichungsnummer: WO 2010/128072

(56) Entgegenhaltungen:
- WO-A1-02/28622
- WO-A1-99/00238
- WO-A1-03/049917
- US-A1- 2004 052 891
- US-A1- 2006 006 578

## Beschreibung

Die Erfindung liegt auf dem Gebiet der Vorrichtungen zum Herstellen von Verschlüssen durch Spritzgiessen, insbesondere Vorrichtungen zum Herstellen und Verschliessen von Scharnierverschlüssen.

Aus dem Stand der Technik sind Verdeckelungsvorrichtungen (Verdeckler) zum Verdeckeln von Scharnierverschlüssen innerhalb einer Spritzgiessform bekannt. Neben Ausführungsformen, die erst nach dem Öffnen der Spritzgiessform von der Seite her einfahren, sind Verdeckelungsvorrichtungen bekannt, die in der Spritzgiessform integriert sind. Diese integrierten Verdeckelungsvorrichtungen sind in den Formhälften versenkt angeordnet und verbleiben in der Spritzgiessform, wenn diese schliesst.

US4340352 der Fa. Global Precision Inc. wurde 1982 publiziert und bezieht sich auf eine von der Seite her einfahrenden Verdeckelungsvorrichtung. Eine über ein Scharnier mit einem Deckelunterteil verbundene Kappe wird über einen Stift angehoben. Anschliessend fährt von der Seite ein an einem Schlitten montierter Schliessarm ein. Dieser hebt über eine Kulissenscheibe gesteuert die Kappe an und schliesst diese.

WO0228622A der Fa. Schoettli AG wurde 2002 publiziert und betrifft eine Vorrichtung, die nach dem Öffnen eines Spritzwerkzeugs mit mehreren Kavitäten in Aktion tritt. Die Verschlussunterteile werden auf einem Kern sitzend zunächst nur wenig aus ihren Kavitäten herausgehoben. Die über ein Scharnier mit dem Verschlussunterteil verbundenen Verschlussoberteile (Deckel) werden dabei komplett ausgestossen und freigestellt. Für das Schliessen der Deckel wird nach dem Öffnen der Form ein Rahmen zwischen die Formteile eingefahren. Am Rahmen sind Arme mit Schliesswalzen angeordnet, mittels denen die Verschlüsse geschlossen werden können. Die Vorrichtung weist einen vergleichsweise komplizierten Aufbau auf.

US5744082A der Fa. Marland Mold Inc. wurde 1998 publiziert und betrifft eine in einer Spritzgiessform integrierte Verdeckelungsvorrichtung. Ein beweglicher Teil der Kavität ist um eine Achse drehbar gelagert und kann nach geöffneter Form zum Schliessen der Kappe um 180° rotiert werden. Die Vorrichtung weist diverse Nachteile auf. Einerseits erfordert sie eine komplizierte Formtrennung. Anderseits kann der Verschluss beim Schliessen nicht ausweichen. Aus diesem Grund ist diese Vorrichtung nur für gewisse Verschlussgeometrien einsetzbar.

EP1386712 der Fa. BVA SRL. wurde 2004 publiziert und betrifft einen in einer Spritzgiessform integrierten Verdeckelungsmechanismus, der über Kurvenbahnen integriert ist. Der Verdeckelungsmechanismus ist beim Spritzgiessen kernseitig in einer der Formebenen integriert versenkt. Nach dem Öffnen der Form soll eine Schliessstange entlang einer Kulisse unter die Kappe bewegt werden, diese Anheben und dann Schliessen. Es ist nicht klar, mit welchem Mechanismus und wie die Stange bewegt werden soll.

WO03049917 von Jes Gram beschreibt eine Vorrichtung zum Herstellen von Scharnierverschlüssen aus mehreren Materialkomponenten. Mittels einem Spritzgiesswerkzeug mit einem drehenden Mittelteil werden in zwei Trennebenen Scharnierverschlüsse hergestellt. Die Grundidee besteht darin, diese Scharnierverschlüsse vor oder spätestens während dem Auswerfen aus der Vorrichtung zu verschliessen. Aus dem Dokument gehen keine Angaben hervor, wie das konkret zu bewerkstelligen ist.

US2009084071A von Moulindustrie SAS zeigt eine Verdeckelungsvorrichtung, die im Innern einer Spritzgiessvorrichtung angeordnet ist. Sie weist mehrere Schliessstangen auf, die über Zahnstangen angetrieben werden und bei geöffneter Spritzgiessvorrichtung auf die Verschlüsse einwirken.

Das Dokument WO03049917A offenbart eine Vorrichtung zur Herstellung von Scharnierverschlüssen aus Kunststoff mit einem um eine Drehachse drehbaren prismatischen Mittelblock, der zwischen einer ersten und einer zweiten Formplatte angeordnet ist, die gegenüber dem Mittelblock in einer ersten Richtung verfahrbar sind und in Schliessstellung mit einer ersten und einer zweiten einander gegenüberliegenden Seitenflächen des Mittelblocks im Bereich einer ersten und einer zweiten Trennebene zusammenwirken. Die Vorrichtung weist ein Handlingsystem auf.

Das Dokument US20060006578A, offenbart eine Verdeckelungsvorrichtung. Die Verdeckelungsvorrichtung weist mehrere Reihen von Haltemitteln auf, die zur layoutgerechten temporären Aufnahme und Halterung von Behältern dienen.

Aus dem Stand der Technik sind Vorrichtungen bekannt, die aus einer Spritzgiessform ausgeworfene Verschlüsse sortieren, um sie dann einzeln einer Verdeckelungsvorrichtung zuzuführen. Diese Vorrichtungen bauen gross und sind vergleichsweise teuer. Die Verschlüsse werden durch Vibration entlang von komplizierten Kulissen bewegt und ausgerichtet. Ein Nachteil dieses Prinzips besteht darin, dass Verschlüsse mit qualitativ hochwertigen Oberflächen häufig zerkratzen. Ein weiterer Nachteil besteht darin, dass die Sortieranlagen zum Verklemmen neigen, was eine intensive, aufwändige Betreuung erfordert.

Eine Aufgabe der Erfindung besteht darin, eine Vorrichtung und ein Verfahren zu zeigen, mittels denen die Herstellung von Verschlüssen, insbesondere Scharnierverschlüssen aus mehreren Komponenten oder Teilen effizient möglich ist.

Eine weitere Aufgabe der Erfindung besteht darin, eine Vorrichtung und ein Verfahren zu zeigen, mittels dem ein sehr effizientes Nachbearbeiten und Testen von Scharnierverschlüssen möglich ist.

Die Aufgabe wird durch die in den Patentansprüchen 1 und 8 definierte Erfindung gelöst.

In einer Ausführungsform betrifft die Erfindung eine Spritzgiessvorrichtung (fortan Vorrichtung) zum Herstellen von Scharnierverschlüssen aus Kunststoff. Die Vorrichtung weist einen um eine Drehachse drehbaren prismatischen Mittelblock auf, der zwischen einer ersten und einer zweiten Formplatte einer Spritzgiessmaschine angeordnet ist. Diese sind gegenüber dem Mittelblock in einer ersten Richtung verfahrbar. In Schliessstellung der Vorrichtung bilden die erste und die zweite Formplatte im Bereich einer ersten und einer zweiten Trennebene mit einer ersten und einer zweiten einander gegenüberliegenden Seitenfläche des Mittelblocks eine Mehrzahl von Kavitäten. Im Unterschied zu den aus dem Stand der Technik bekannten Vorrichtungen (z.B. mit integriertem Verdeckler) besteht die Möglichkeit, die Kavitäten einem für die Herstellung optimierten Layout entsprechend anzuordnen. Die Vorrichtung weist weiter ein Handlingsystem auf, welches zur layoutgerechten Entnahme und Überführung der Scharnierverschlüsse an eine Verdeckelungsvorrichtung dient. Dies bedeutet, dass das Handlingsystem die Verschlüsse unter Beibehaltung des Layouts entnimmt und übergibt. Im Unterschied zu mit einer Sortieranlage extern verdeckelten Verschlüssen resultiert eine schonendere Verarbeitung und eine verbesserte Rückverfolgbarkeit.

In einer Ausführungsform der Erfindung sind der Mittelblock und das Handlingsystem an derselben oder an miteinander wirkverbundenen Haltevorrichtungen befestigt, so dass das Handlingsystem immer mit dem Mittelblock koordiniert ist, respektive sich mit diesem mitbewegt. Je nach Ausführungsform wird der Mittelblock nicht translatorisch verschoben oder er ist entlang von einer Linearführung gegenüber der ersten und/oder der zweiten Formplatte verfahrbar angeordnet. Bei der Linearführung kann es sich um die Holmen einer Spritzgiessmaschine oder z.B. um ein auf einem Maschinenbett der Spritzgiessmaschine abgestütztes Schienensystem handeln. Gute Resultate werden erzielt, indem die Haltevorrichtung aus zwei Traversen besteht, die unten und oben am Mittelblock angeordnet sind und mit diesem über Dreheinheiten wirkverbunden sind, über die der Mittelblock koaxial mit Energie und Medien (z.B. Luft, Wasser, Öl) versorgt wird.

In einer Ausführungsform ist das Handlingsystem an einer stationären Haltevorrichtung angeordnet, welche nicht oder nur begrenzt mit dem Mittelblock mitfährt. Das Handlingsystem und die Haltevorrichtung können als separate Vorrichtung ausgestaltet sein, welche z.B. seitlich neben der Spritzgiessvorrichtung angeordnet sind und die Verschlüsse in einer definierten Position vom Mittelblock abnehmen und/oder aus einer Trennebene entnehmen. Eine entsprechende Ausgestaltung des Handlingsystems ist dafür erforderlich. Durch eine mehrachsige Bewegungskette können die Verschlüsse an die Verdeckelungsvorrichtung übergeben werden.

Vorzugsweise weist das Handlingsystem erste Haltemittel auf, die entsprechend dem Layout der Kavitäten angeordnet sind. Bei den ersten Haltemitteln kann es sich beispielsweise um Saugnäpfe und/oder mechanische Greifer handeln.

Gute Resultate werden mit einer Verdeckelungsvorrichtung erzielt, die mehrere Reihen von zweiten Haltemitteln aufweist, die zur layoutgerechten temporären Übernahme und Halterung von mit dem Handlingsystem zugeführten Scharnierverschlüssen dienen. Dabei werden die Scharnierverschlüsse von den ersten an die zweiten Haltemittel übergeben. Die Haltemittel einer Reihe können an einem Balken befestigt sein, der um eine erste Drehachse drehbar ist, damit die Scharnierverschlüsse von einer ersten Position (Aufnahmeposition) in eine zweite Position (Abgabeposition) bewegt werden können. Zur Effizienzsteigerung können die Balken auf mehreren Seiten zweite Haltemittel aufweisen. Damit können auf der einen Seite offene Scharnierverschlüsse aufgenommen und auf der gegenüberliegenden Seite geschlossene Scharnierverschlüsse abgegeben werden. Bei Bedarf kann die Verdeckelungsvorrichtung Mittel zum Testen der Dichtigkeit von Scharnierverschlüssen aufweisen. Die Dichtigkeit kann dadurch unmittelbar nach dem Verschliessen getestet werden. Alternativ oder in Ergänzung kann die Verdeckelungsvorrichtung mindestens eine um eine erste Achse drehbare Deckelstange umfassen, die zum Verschliessen der Scharnierverschlüsse dient. Bei Bedarf kann die Verdeckelungsvorrichtung Schliesszapfen aufweisen, welche beim Drehen der Balken einen Teil der Verschlüsse hintergreifen, so dass diese infolge der Drehung des Balkens verschlossen werden. Weitere Bewegungen können überlagert werden.

In einer Ausführungsform sind die Handlingvorrichtung und die Verdeckelungsvorrichtung beide an demselben Gestell befestigt, welches neben der Spritzgiessvorrichtung stationär angeordnet ist. Die Handlingvorrichtung ist oberhalb der Verdeckelungsvorrichtung angeordnet und weist eine Greiferplatte zur layoutgerechten Entnahme von Verschlüssen auf.

Die Erfindung wird anhand der in den nachfolgenden Figuren beschriebenen Ausführungsformen näher erläutert. Es zeigen:
- Fig. 1: Eine Ausführungsform der Erfindung in einer perspektivischen Darstellung von schräg oben;
- Fig. 2: Eine erfindungsgemässe Verdeckelungsvorrichtung in einer perspektivischen Darstellung von schräg oben;
- Fig. 3: Technische Dokumentation der Funktionsweise der Vorrichtung;
- Fig. 4: Eine stationär angeordnete Entnahme- und Verdeckelungsvorrichtung;
- Fig. 5: Die Funktionsweise der Entnahme- und Verdeckelungsvorrichtung gemäss Figur 4.

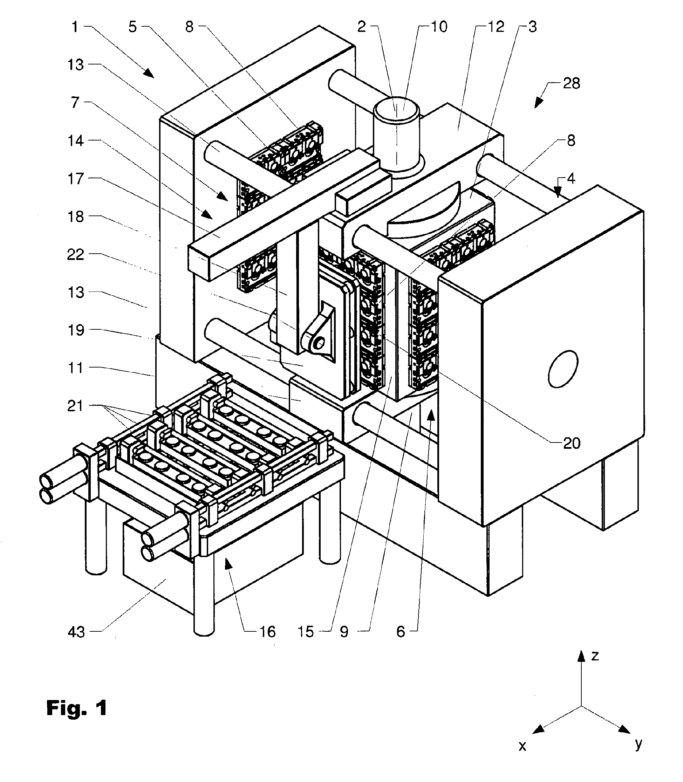

Figur 1 zeigt eine erfindungsgemässe Vorrichtung 1 zum Herstellen von Scharnierverschlüssen in einer perspektivischen Darstellung von schräg oben. Die Vorrichtung 1 weist einen um eine Drehachse 2 drehbaren prismatischen Mittelblock 3 auf, der zwischen einer ersten und einer zweiten Formplatte 4, 5 angeordnet ist. Die erste und die zweite Formplatte sind gegenüber dem Mittelblock in einer ersten Richtung (y-Richtung) verfahrbar und bilden in Schliessstellung im Bereich einer ersten und einer zweiten Trennebene 6, 7 eine Mehrzahl von Kavitäten 8.

Der Mittelblock 3 wird in der gezeigten Ausführungsform über ein unteres und ein oberes Drehsystem 9, 10 an einer unteren und einer oberen Traverse 11, 12 entlang der Holmen 13 geführt.

Die Vorrichtung 1 weist ein hier an der oberen Traverse 12 befestigtes Handlingsystem 14 auf, welches zur layoutgerechten Entnahme und Überführung der Scharnierverschlüsse von einer zugewandten Formseite 15 des Mittelblocks 3 der an eine hier seitlich neben dem Mittelblock 3 angeordnete Verdeckelungsvorrichtung 16 dient.

Das Handlingsystem 14 weist einen horizontal angeordneten Kragarm 17 auf, an dem ein nach unten gerichteter Greiferarm 18 mit einer daran gelenkig befestigten Greiferplatte 19 entlang des Kragarms 17 linear verschiebbar angeordnet ist. Die Greiferplatte 19 ist mit ersten Greifern 20 bestückt, die dem Layout der Kavitäten 8 der Formseite 15 entsprechend angeordnet sind.

Nachdem die Scharnierverschlüsse (nicht näher dargestellt) in den Kavitäten 8 der ersten und der zweiten Trennebene 6, 7 hergestellt worden sind, werden sie nach dem Öffnen der Vorrichtung 1 an einer Formseite 15 des Mittelblocks 3 haftend durch Drehen des Mittelblocks 3 um die Drehachse 2 in den Wirkbereich des Handlingsystems 14 befördert. Die Verschlüsse haften an der Formseite 15 des Mittelblocks 3 z.B. infolge von definierten Hintergriffen, die einfach entformbar sind oder infolge eines kontrolliert angelegten Unterdrucks. Nach Erreichen der Übergabeposition wird die Greiferplatte 19 um eine Schwenkachse 22 nach innen geschwenkt, bis die ersten Greifer 20 gegenüber den Kavitäten 8 der zugewandten Formseite 15 stehen. Anschliessend wird die Greiferplatte 19 in Richtung der Formseite 15 verfahren, bis die ersten Greifer 20 die Verschlüsse erfassen. Mit Unterstützung eines im Mittelblock 3 angeordneten Auswerfmechanismus werden die geöffneten Verschlüsse ausgestossen und von den Greifern 20 kontrolliert übernommen. Nachdem die Verschlüsse von der Formseite 15 gelöst sind, werden sie mit dem Handlingsystem 14 an zweite Greifer 21 der Verdeckelungsvorrichtung 16 direkt oder indirekt übergeben. Bei diesem Vorgang wird das Layout der Verschlüsse (d.h. deren Anordnung entsprechend der Formseite 15) vorzugsweise beibehalten. Falls erforderlich, können weitere Schritte dazwischen geschalten werden, die eine indirekte Übergabe erfordern.

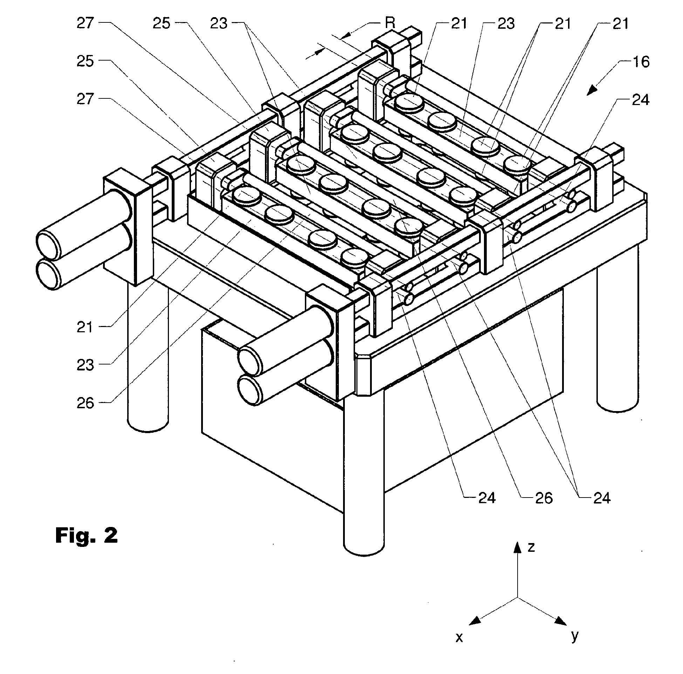

In Figur 2 ist die Verdeckelungsvorrichtung 16 gemäss Figur 1 vergrössert und aus der Vorrichtung 1 herausgelöst dargestellt. Die Verdeckelungsvorrichtung 16 weist mehrere Reihen von zweiten Haltemitteln 21 aufweist, die zur layoutgerechten temporären Aufnahme und Halterung von mit dem Handlingsystem 16 zugeführten Scharnierverschlüsse dienen. In der gezeigten Ausführungsform sind die zweiten Haltemittel 21 einer Reihe je an einem Balken 23 befestigt sind, der hier je um eine erste Drehachse 24 in Lagerblöcken 27 drehbar gelagert ist. Insgesamt sind hier vier Balken 24 zu erkennen (andere Anzahl möglich). Die Balken 24 weisen auf zwei gegenüberliegenden Seiten layoutgerecht angeordnete zweite Haltemittel 21 auf.

Bei Bedarf weist die Verdeckelungsvorrichtung Mittel zum Testen der Dichtigkeit von Scharnierverschlüssen auf. Beispielsweise indem bei geschlossenen Verschlüssen ein kontrollierter Unterdruck von innen über die zweiten Haltemittel 22 angelegt wird. Bei Bedarf kann eine Beschriftungsvorrichtung oder eine Labelklebevorrichtung (beide nicht näher dargestellt) integriert sein, mittels der die Verschlüsse beschriftet, bzw. mit einem Label beklebt werden können.

Zum eigentlichen Verschliessen der Verschlüsse weist die gezeigte Verdeckelungsvorrichtung 16 Deckelstangen 26 auf, die um eine zweite Drehachse 27 in einem Abstand R zu dieser drehbar angeordnet ist. Die Deckelstangen 26 hintergreifen die zu verschliessenden Kappen der auf den zweiten Haltemitteln 21 angeordneten Verschlüsse. Durch Drehen der Deckelstangen 26 um die zweite Drehachse 27 werden die Verschlüsse geschlossen. Alternativ oder in Ergänzung kann die Verdeckelungsvorrichtung mit Zapfen ausgestattet sein, welche die Verschlüsse hintergreifen und diese beim Drehen der Balken 23 infolge dieser Drehung verschliessen.

Nachdem die Verschlüsse verschlossen sind, werden sie durch Drehen der Balken 23 um die ersten Drehachsen 24 in den unteren Bereich der Verdeckelungsvorrichtung 16 bewegt, wo sie in einen Behälter 43 hinein abgeworfen oder auf ein Förderband abgelegt werden. Bei Bedarf kann auch ein weiteres Handlingsystem vorgesehen werden, das beispielsweise für die Verpackung zuständig ist.

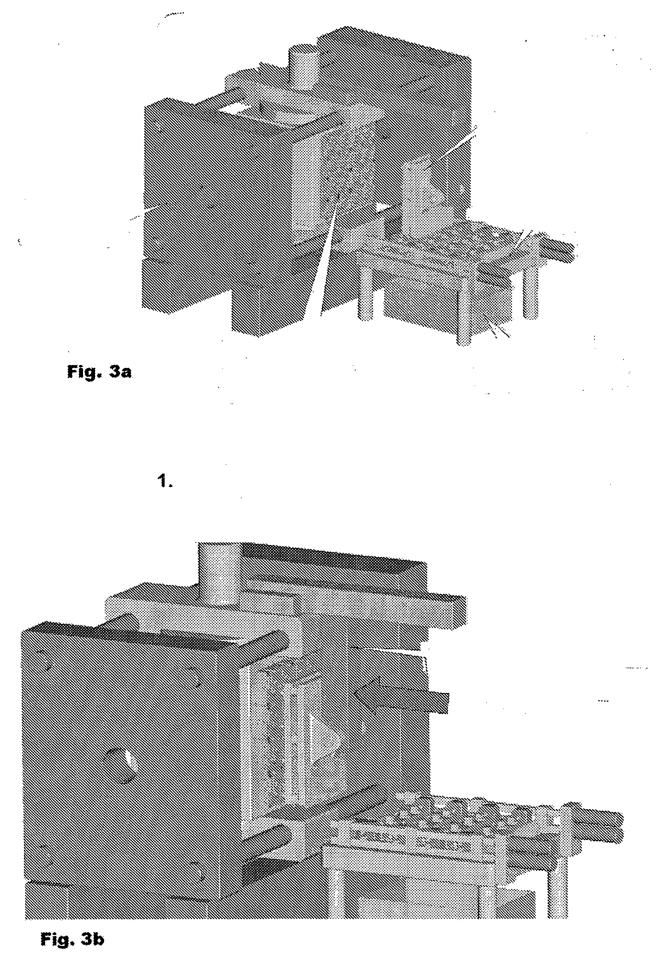

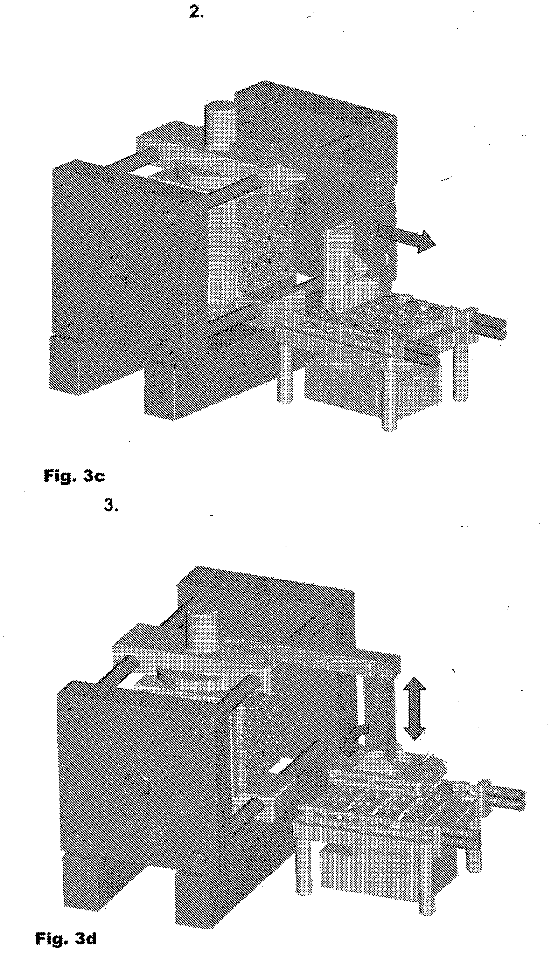

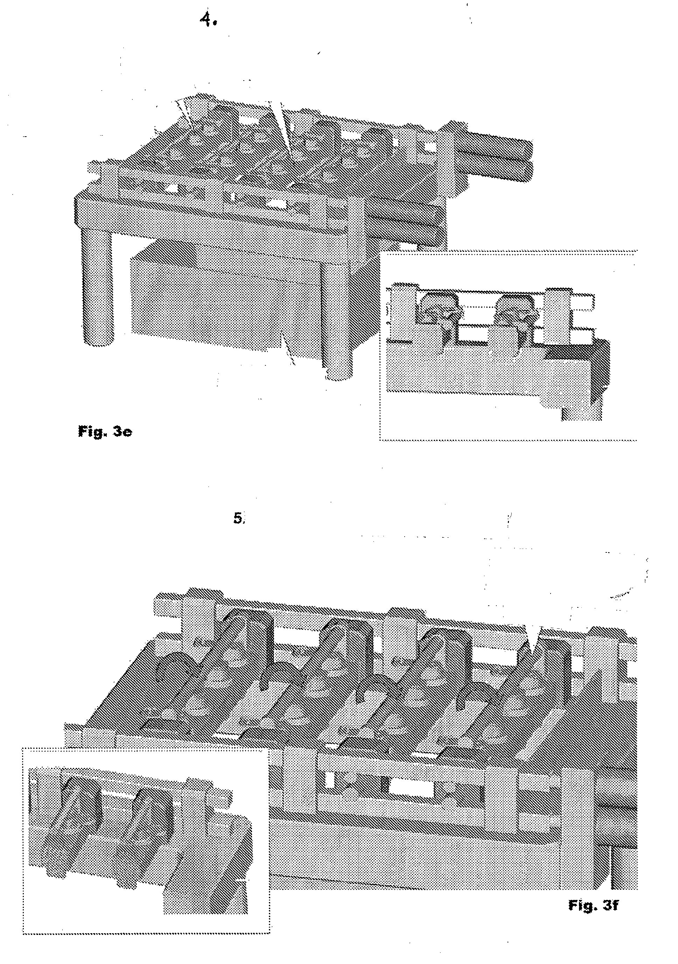

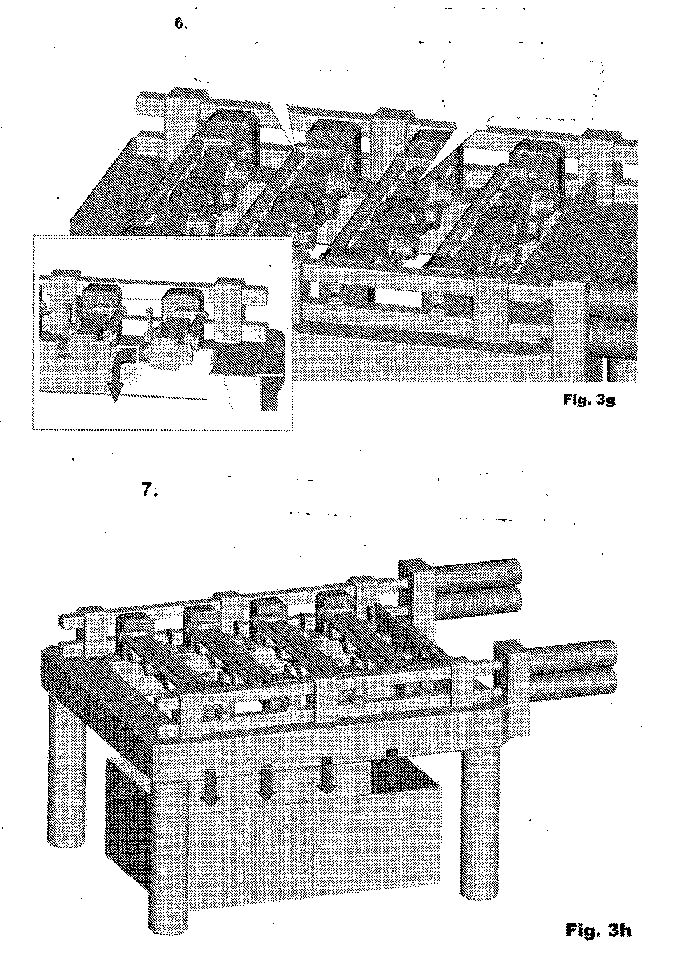

In den Figuren 3a bis 3h wird die Funktionsweise einer erfindungsgemässen Vorrichtung nochmals erläutert.

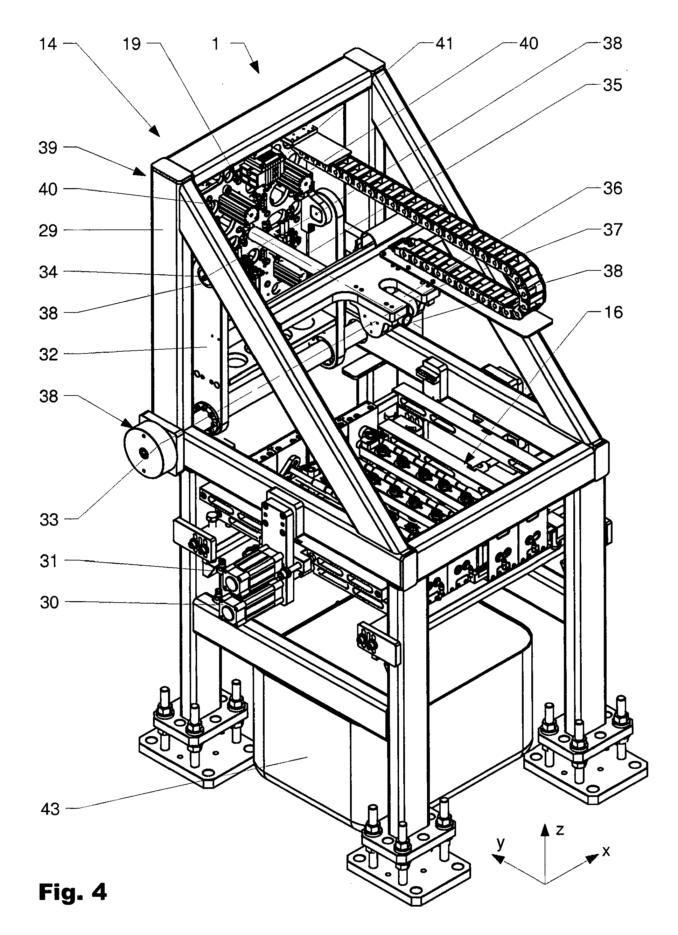

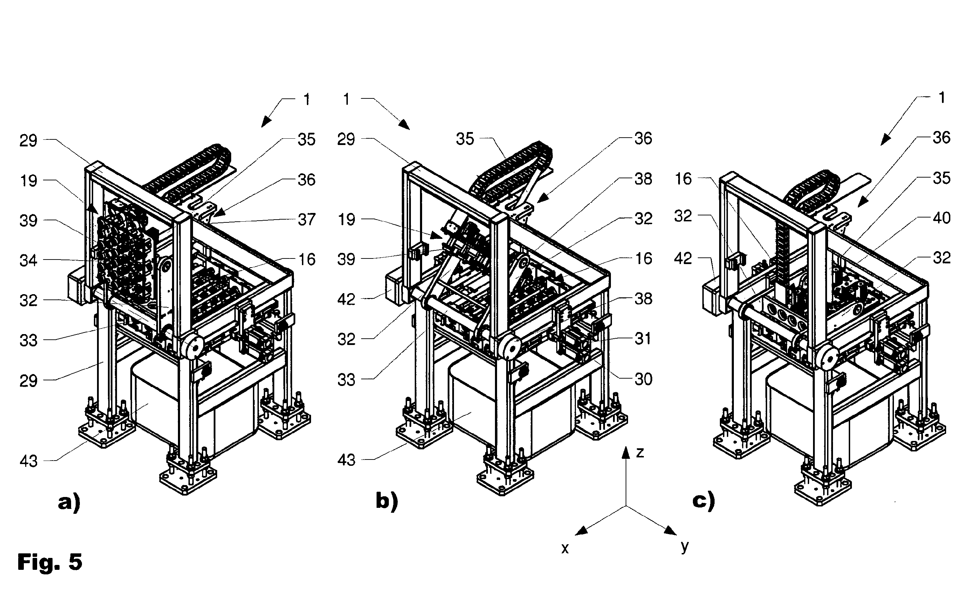

Figur 4 zeigt eine weitere Ausführungsform bei der eine Handlingvorrichtung 14 und eine Verdeckelungsvorrichtung 16 an einem Gestell 29 befestigt sind. Die Funktionsweise ist in Figur 5 schematisch dargestellt. Die eigentliche Verdeckelungsvorrichtung 16 ist am Gestell 29 hier horizontal liegend befestigt. Oberhalb davon ist das Handlingsystem 14 angeordnet, mittels dem Verschlüsse aus einer Spritzgiessvorrichtung (beide nicht näher dargestellt) entnommen und der Verdeckelungsvorrichtung 16 zugeführt werden. Bei der Verdeckelungsvorrichtung 16 handelt es sich im Wesentlichen um die in Figur 2 gezeigte Verdeckelungsvorrichtung 16, so dass bezüglich deren Funktion auf die entsprechende Beschreibung verwiesen wird. Seitlich am Gestell 29 sind ein erster und ein zweiter Aktuator 30, 31 zu erkennen, die zum Antrieb der Verdeckelungsvorrichtung 16 dienen. Je nach Ausführungsform kann es sich um elektrische, pneumatische oder hydraulische Linearantriebe oder andere Antriebe handeln.

Eine Greiferplatte 19 ist an einem Schwenkarm 32 befestigt, der um eine erste Schwenkarmachse 33 schwenkbar angeordnet ist. Die Greiferplatte 19 ist gegenüber dem Gelenkhebel 32 um eine zweite Schwenkarmachse 34 schwenkbar angeordnet. Die Ausrichtung der Greiferplatte 19 wird durch eine auf der Hinterseite der Greiferplatte 19 befestigte nach hinten abstehende Führungsstange 35 koordiniert. Die Schubstange 35 ist in einem Linearlager 36 gelagert, das wiederum um eine dritte Schwenkarmachse 37 am Gestell 29 drehbar befestigt ist. In der gezeigten Ausführungsform sind die erste, die zweite und die dritte Schwenkarmachse 33, 34, 37 parallel zueinander angeordnet. Die zum Verschwenken erforderlichen rotativen Freiheitsgrade werden durch Radiallager 38 sichergestellt. Durch andere Anordnungen können andere Bewegungsabläufe erzielt werden. Die Führung und Halterung der Kabel und Versorgungsleitungen für die Greiferplatte 19 erfolgt in der gezeigten Ausführungsform über eine Gliederkette 44.

Die Bewegung der Greiferplatte 19 ist in **Figur 5** in drei Schritten schematisch dargestellt. In **Figur 5a** ist die Greiferplatte 19 in einer ersten, oberen vertikalen Endposition dargestellt, in der sie zur Übernahme von Verschlüssen oder anderen Gegenständen (beide nicht näher dargestellt) von einem Mittelblock 3 (vgl. **Figur 1**) oder einer anderen Spritzgiessvorrichtung bereit ist. Die Greiferplatte 19 weist zu diesem Zweck Greifer 39 auf, die zur Aufnahme und Halterung der Verschlüsse oder anderen Gegenstände dienen und den Kavitäten (des Mittelblocks) entsprechend angeordnet sind. Bei Bedarf können die Greifer 39 z.B. zur Aufnahme oder Abgabe der Verschlüsse mittels einem Linearantrieb 40 (vgl. **Figur 4**) relativ zu einer Grundplatte 41 der Greiferplatte 19 bewegt werden. Nach Aufnahme der Verschlüsse durch die Greifer 39 wird der Schwenkarm 32 mittels eines Drehantriebes 42 um die erste Schwenkarmachse 33 geschwenkt. Infolge der durch die Gelenke 36, 38 definierten kinematischen Zusammenhänge wird die Greiferplatte 19 nach unten geschwenkt (vgl. **Figur 5b**) bis sie in einer zweiten, unteren horizontalen Endposition (vgl. **Figur 5c**) angelangt ist, in der die Verschlüsse an die Verdeckelungsvorrichtung 16 übergeben werden können. Je nach Anwendungsgebiet kann die Greiferplatte 19 auch durch eine andere am Gestell 29 befestigte ein- oder mehrachsige Handlingvorrichtung 14 zwischen der ersten und der zweiten Position hin und her bewegt werden.

Vorteile der gezeigten Vorrichtung bestehen darin, dass diese einen einfachen Aufbau aufweist, flexibel ist und wenig Platz benötigt. Infolge der Ausgestaltung wird die Produktionseffizienz gesteigert, was sich positiv auf die Herstellungskosten auswirkt. Durch den modularen Aufbau kann die Vorrichtung separat von der Spritzgiessvorrichtung hergestellt und installiert werden. Durch eine Anpassung des Bewegungsablaufes kann auf unterschiedlichsten Bedürfnissen Rechnungen getragen werden. Die in den **Figuren 4** und **5** gezeigte Vorrichtung 1 zum Verdeckeln von Scharnierverschlüssen weist in der Regel eine separate Steuerung und separate Antriebsmittel auf, welche ihr eine autonome Funktionsweise ermöglichen. Durch die separate Steuerung kann sie auf die Anforderungen einer zu kombinierenden Spritzgiessvorrichtung optimiert werden.

**Bezugszeichenliste**

| | | | |
|---|---|---|---|
| 1 | Vorrichtung | 26 | Deckelstange |
| 2 | Drehachse | 27 | Zweite Drehachse |
| 3 | Mittelblock | 28 | Spritzgiessmaschine |
| 4 | Erste Formplatte | 29 | Gestell |
| 5 | Zweite Formplatte | 30 | Erster Aktuator |
| 6 | Erste Trennebene | 31 | Zweiter Aktuator |
| 7 | Zweite Trenneben | 32 | Schwenkarm |
| 8 | Kavität | 33 | Erste Schwenkarmachse |
| 9 | Unteres Drehsystem | 34 | Zweite Schwenkarmachse |
| 10 | Oberes Drehsystem | 35 | Führungsstange |
| 11 | Untere Traverse | 36 | Linearlager |
| 12 | Obere Traverse | 37 | Dritte Schwenkarmachse |
| 13 | Holmen | 38 | Radiallager |
| 14 | Handlingsystem / Handlingvorrichtung | 39 | Greifer (Haltemittel) |
| | | 40 | Linearantrieb |
| 15 | Formseite | 41 | Grundplatte |
| 16 | Verdeckelungsvorrichtung | 42 | Drehantrieb |
| 17 | Kragarm | 43 | Behälter |
| 18 | Greiferarm | 44 | Gliederkette (Kabelführung) |
| 19 | Greiferplatte | | |
| 20 | Erste Greifer | | |
| 21 | Zweite Greifer | | |
| 22 | Schwenkachse | | |
| 23 | Balken | | |
| 24 | Erste Drehachse | | |
| 25 | Lagerblöcke | | |

## Patentansprüche

1. Vorrichtung (1) zum Herstellung von Scharnierverschlüssen aus Kunststoff
a. mit einem um eine Drehachse (2) drehbaren prismatischen Mittelblock (3), der zwischen einer ersten und einer zweiten Formplatte (4, 5) angeordnet ist, die gegenüber dem Mittelblock (3) in einer ersten Richtung verfahrbar sind und in Schliessstellung mit einer ersten und einer zweiten einander gegenüberliegenden Seitenfläche des Mittelblocks (3) zwecks der Bildung einer Mehrzahl von einem optimierten Layout entsprechend angeordneten Kavitäten im Bereich einer ersten und einer zweiten Trennebene (6, 7) zusammenwirken,
b. mit einem Handlingsystem und
c. einer seitlich neben dem Mittelblock (3) angeordneten Verdeckelungsvorrichtung (16) mit mehreren Reihen von zweiten Haltemitteln (21), die zur layoutgerechten temporären Übernahme und Halterung von mit einem Handlingsystem (14) zugeführten Scharnierverschlüssen dienen, wobei
d. das Handlingsystem (14) seitlich neben dem Mittelblock (3) angeordnet ist und erste Haltemittel (20) aufweist, die zur layoutgerechten Entnahme und Überführung der Scharnierverschlüsse an die zweiten Haltemittel der Verdeckelungsvorrichtung (16) dienen.

2. Vorrichtung (1) gemäss Patentanspruch 1, wobei der Mittelblock (3) an einer Haltevorrichtung (17) befestigt ist, an der auch das Handlingsystem (14) befestigt ist.

3. Vorrichtung (1) gemäss Patentanspruch 1, wobei die Verdeckelungsvorrichtung (16) und das Handlingsystem (14) an einem ortsfesten Gestell (29) montiert sind, das sich nicht mit dem Mittelblock (3) mitbewegt.

4. Vorrichtung (1) gemäss einem der vorangehenden Patentansprüche, wobei der Mittelblock (3) entlang von einer Linearführung (13) gegenüber der ersten und/oder der zweiten Formplatte (4, 5) verfahrbar angeordnet ist.

5. Vorrichtung (1) gemäss Patentanspruch 4, wobei die Linearführung Holmen (13) einer Spritzgiessmaschine (28) oder ein auf einem Maschinenbett der Spritzgiessmaschine (28) abgestütztes Schienensystem umfasst.

6. Vorrichtung (1) gemäss einem der vorangehenden Patentansprüche, wobei das Handlingsystem (14) Haltemittel (39) aufweist, die entsprechend dem Layout der Kavitäten angeordnet sind.

7. Vorrichtung (1) gemäss Patentanspruch 6, wobei die Haltemittel Saugnäpfe und/oder mechanische Greifer (39) sind.

8. Verdeckelungsvorrichtung (16) zur Verwendung mit einer Vorrichtung (1) gemäss einem der vorangehenden Patentansprüche, wobei
a. die Verdeckelungsvorrichtung (16) mehrere Reihen von Haltemitteln (21) aufweist, die zur layoutgerechten temporären Aufnahme und Halterung von mit einem Handlingsystem (14) zugeführten Scharnierverschlüsse dienen,
b. wobei die Haltemittel (21) je einer Reihe an einem Balken (23) befestigt sind, der um eine erste Drehachse (24) drehbar ist.

9. Verdeckelungsvorrichtung (16) gemäss Patentanspruch 8, wobei der Balken (23) auf mehreren Seiten layoutgerecht angeordnete Haltemittel aufweist.

10. Verdeckelungsvorrichtung (16) gemäss einem der Patentansprüche 8 oder 9, wobei die Verdeckelungsvorrichtung (16) Mittel zum Testen der Dichtigkeit von Scharnierverschlüssen aufweist.

11. Verdeckelungsvorrichtung (16) gemäss einem der Patentansprüche 8 bis 10, wobei die Verdeckelungsvorrichtung (16) pro Reihe eine um eine zweite Drehachse (27) drehbare Deckelstange (26) umfasst, die zum Verschliessen der durch die zweiten Haltemittel (21) gehaltenen Scharnierverschlüsse dient.

12. Verdeckelungsvorrichtung (16) gemäss Patentanspruch 8, wobei die Verdeckelungsvorrichtung (16) Schliesszapfen aufweist, welche beim Drehen der Balken (23) einen Teil der Verschlüsse hintergreift, so dass diese infolge der Drehung des Balkens (23) verschlossen werden.

13. Verdeckelungsvorrichtung (16) gemäss einem der Patentansprüche 8 bis 12, wobei die Verdeckelungsvorrichtung (16) an einem stationär angeordneten Gestell (29) befestigt ist und die Verdeckelungsvorrichtung (16) ein Handlingsystem aufweist, mittels dem Scharnierverschlüsse von einer Formhälfte übernommen und der Verdeckelungsvorrichtung (16) zugeführt werden.

14. Verdeckelungsvorrichtung (16) gemäss Patentanspruch 13, wobei die Handlingvorrichtung (14) und die Verdeckelungsvorrichtung (16) an demselben Gestell (29) befestigt sind.

## Claims

1. Apparatus (1) for the production of hinged closures made of plastic
a. having a prismatic center block (3) that can rotate about an axis of rotation (2), which block is disposed between a first and a second mold plate (4, 5), which plates are displaceable in a first direction relative to the center block (3), and interact, in the closed position, with a first and a second side surface of the center block (3), which surfaces lie opposite one another, for the purpose of forming a plurality of cavities, disposed in accordance with an optimized layout, in the region of a first and a second parting plane (6, 7),
b. having a handling system, and
c. a capping apparatus (16) disposed laterally next to the center block (3), having multiple rows of second holding means (21) that serve for temporary receiving and holding, in accordance with the layout, of hinged closures fed in using a handling system (14), wherein
d. the handling system (14) is disposed laterally next to the center block (3) and has first holding means (20) that serve for removal and transfer of the hinged closures, in accordance with the layout, to the second holding means of the capping apparatus (16).

2. Apparatus (1) according to claim 1, wherein the center block (3) is attached to a holding apparatus (17) to which the handling system (14) is also attached.

3. Apparatus (1) according to claim 1, wherein the capping apparatus (16) and the handling system (14) are mounted on a frame (29) that is fixed in place and does not move along with the center block (3).

4. Apparatus (1) according to one of the preceding claims, wherein the center block (3) is disposed so as to be displaceable along a linear guide (13), relative to the first and/or the second mold plate (4, 5).

5. Apparatus (1) according to claim 4, wherein the linear guide comprises crosspieces (13) of an injection-molding machine (28) or a rail system supported on a machine bed of the injection-molding machine (28).

6. Apparatus (1) according to one of the preceding claims, wherein the handling system (14) has holding means (39) that are disposed in accordance with the layout of the cavities.

7. Apparatus (1) according to claim 6, wherein the holding means are suction cups and/or mechanical grippers.

8. Capping apparatus (16) for use with an apparatus (1) according to one of the preceding claims, wherein
a. the capping apparatus (16) has multiple rows of holding means (21) that serve for temporary receiving and holding, in accordance with the layout, of hinged closures fed in using a handling system (14),
b. wherein each row of holding means (21) is attached to a beam (23), which can rotate about a first axis of rotation (24).

9. Capping apparatus (16) according to claim 8, wherein the beam (23) has holding means disposed on multiple sides, in accordance with the layout.

10. Capping apparatus (16) according to one of claims 8 or 9, wherein the capping apparatus (16) has means fortesting the tightness of hinged closures.

11. Capping apparatus (16) according to one of claims 8 to 10, wherein the capping apparatus (16), per row, comprises a cap rod (26) that can rotate about a second axis of rotation (27) and serves for closing the hinge closures held by the second holding means (21).

12. Capping apparatus (16) according to claim 8, wherein the capping apparatus (16) has closing journals that engage behind part of the closures when the beam (23) is rotated, so that they are closed as a result of the rotation of the beam (23).

13. Capping apparatus (16) according to one of claims 8 to 12, wherein the capping apparatus (16) is attached to a frame (29) disposed to be stationary, and the capping apparatus (16) has a handling system by means of which the hinged closures are taken over by a mold half and passed to the capping apparatus (16).

14. Capping apparatus (16) according to claim 13, wherein the handling apparatus (14) and the capping apparatus (16) are attached to the same frame (29).

## Revendications

1. Appareil (1) pour la fabrication de fermetures à charnière en matière plastique, comportant
a. un bloc central prismatique (3), pouvant tourner autour d'un axe de rotation (2), qui est disposé entre une première et une seconde plaque de forme (4, 5) qui peuvent se déplacer dans une première direction par rapport au bloc central (3) et qui coopèrent dans la position de fermeture avec une première et une seconde surface latérale du bloc central (3) à l'opposé l'une de l'autre pour former une pluralité de cavités disposées de manière correspondante dans un arrangement optimisé dans la région d'un premier et d'un second plan de séparation (6, 7),
b. un système de manipulation et
c. un dispositif de recouvrement (16) disposé latéralement à côté du bloc central (3) et comportant plusieurs rangées de seconds moyens de retenue (21) qui servent à prendre en charge et à retenir temporairement et conformément à l'arrangement des fermetures à charnière acheminées au moyen d'un système de manipulation (14),
d. la système de manipulation (14) étant disposé latéralement à côté du bloc central (3) et présentant des premiers moyens de retenue (20) qui servent à prendre les fermetures à charnière en charge conformément à l'arrangement et à les transférer aux deuxièmes moyens de retenue du dispositif de recouvrement (16).

2. Appareil (1) selon la revendication 1, dans lequel le bloc central (3) est fixé à un dispositif de retenue (17) auquel le système de manipulation (14) est aussi fixé.

3. Appareil (1) selon la revendication 1, dans lequel le dispositif de recouvrement (16) et le système de manipulation (14) sont montés sur un bâti fixe (29) qui ne se déplace pas avec le bloc central (3).

4. Dispositif (1) selon l'une des revendications précédentes, dans lequel le bloc central (3) est disposé mobile en translation le long d'un guidage linéaire (13) par rapport à la première et/ou à la deuxième plaque de forme (4, 5).

5. Dispositif (1) selon la revendication 4, dans lequel le guidage linéaire comprend des longerons (13) d'une machine à mouler par injection (28) ou un système de rails appuyé sur un banc de machine de la machine à mouler par injection (28).

6. Dispositif (1) selon l'une des revendications précédentes, dans lequel le système de manipulation (14) comprend des moyens de retenue (39) qui sont disposés conformément à l'arrangement des cavités.

7. Dispositif (1) selon la revendication 6, dans lequel les moyens de retenue sont des ventouses et/ou des mâchoires mécaniques (39).

8. Dispositif de recouvrement (16) destiné à être utilisé avec un dispositif (1) selon l'une des revendications précédentes, dans lequel
a. le dispositif de recouvrement (16) présente plusieurs rangées de moyens de retenue (21) qui servent à la réception et à la retenue temporaires correspondant à l'arrangement de fermetures à charnière acheminées au moyen d'un système de manipulation (14) ;
b. chaque rangée de moyens de retenue (21) étant fixés à une poutre (23) qui peut tourner autour d'un premier axe de rotation (24).

9. Dispositif de recouvrement (16) selon la revendication 8, dans lequel la poutre (23) présente des moyens de retenue disposés sur plusieurs côtés conformément à l'arrangement.

10. Dispositif de recouvrement (16) selon l'une des revendications 8 ou 9, dans lequel le dispositif de recouvrement (16) présente des moyens servant à tester l'étanchéité des fermetures à charnière.

11. Dispositif de recouvrement (16) selon l'une des revendications 8 à 10, dans lequel le dispositif de recouvrement (16) comprend, par rangée, une tringle de couvercle (26) qui peut tourner autour d'un second axe de rotation (27) et qui sert à fermer les fermetures à charnière retenues par les deuxièmes moyens de retenue (21)

12. Dispositif de recouvrement (16) selon la revendication 8, dans lequel le dispositif de recouvrement (16) présente un tourillon de fermeture qui, lors de la rotation de la poutre (23), s'engage derrière une partie des fermetures, de sorte que ces dernières sont fermées sous l'effet de la rotation de la poutre (23).

13. Dispositif de recouvrement (16) selon l'une des revendications 8 à 12, dans lequel le dispositif de recouvrement (16) est fixé à une charpente disposée stationnaire (29) et le dispositif de recouvrement (16) présente un système de manipulation au moyen duquel les fermetures à charnière sont prises en charge par un demi-moule et sont acheminées au dispositif de recouvrement (16).

14. Dispositif de recouvrement (16) selon la revendication 13, dans lequel le dispositif de manipulation (14) et le dispositif de recouvrement (16) sont fixés à la même charpente (29).
